(19) Europäisches Patentamt
European Patent Office
Office européen des brevets

(11) Publication number: 0 140 513
A1

# (12) EUROPEAN PATENT APPLICATION

(21) Application number: 84305678.9

(22) Date of filing: 21.08.84

(51) Int. Cl.⁴: G 11 B 5/66

(30) Priority: 24.08.83 US 525853

(43) Date of publication of application: 08.05.85 Bulletin 85/19

(84) Designated Contracting States: DE FR GB IT

(71) Applicant: International Business Machines Corporation
Old Orchard Road
Armonk, N.Y. 10504(US)

(72) Inventor: Eltoukhy, Atef H.
6088 Crestoak Court
San Jose California 95120(US)

(74) Representative: Atchley, Martin John Waldegrave
IBM United Kingdom Patent Operations Hursley Park
Winchester, Hants, SO21 2JN(GB)

## (54) Thin film magnetic recording structures.

(57) A magnetic recording structure comprises a substrate (12), a nonmagnetic underlayer (11b) on the substrate, and a magnetic layer (11a) on the underlayer. Both the magnetic layer and the non-magnetic underlayer contain an alloy of Co and at least one other element.

According to one arrangement both the non-magnetic underlayer and the magnetic layer have a microstructure primarily in hexagonal close packed form so that the easy axis of the magnetic layer extends primarily perpendicular to the plane of the magnetic layer for vertical recording.

According to another arrangement the non-magnetic underlayer has a microstructure primarily in a body centred cubic form and the magnetic layer has a microstructure primarily in hexagonal close packed form so that the easy axis of the magnetic layer extends primarily parallel to the plane of the magnetic layer for horizontal recording.

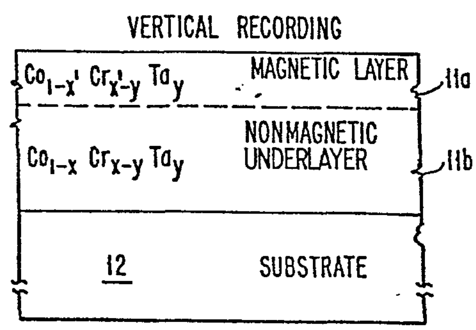


FIG. 1

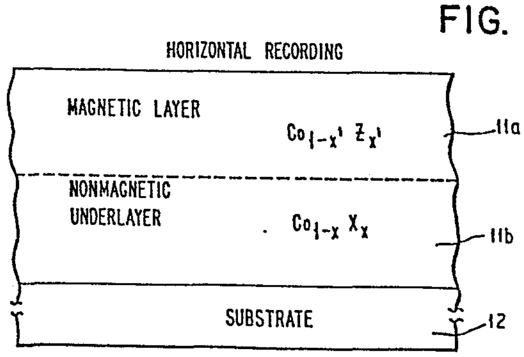


FIG. 6

EP 0 140 513 A1

# THIN FILM MAGNETIC RECORDING STRUCTURES

The present invention relates to thin magnetic film structures for magnetic recording.

Because of their potential for increased recording capacity, there has been and is substantial interest in thin film magnetic recording structures for both perpendicular (vertical) and longitudinal (horizontal) recording. Some evidence of this interest is given by the following references:

Hoagland, A., "High Resolution Magnetic Recording Structures", IBM Journal of Research and Development, April 1958, pp. 90-104. This paper describes a cobalt chromium alloy medium with a ferrite ring or pole head structure.

Iwasaki, S. and Nakamura, Y., "An Analysis for the Magnetisation Mode for High Density Magnetic Recording", IEEE Transactions on Magnetics. Vol. MAG-13. No. 5, September 1977, pp. 1272-1277. This paper also describes a cobalt chromium alloy medium with a ferrite ring or pole head structure.

Daval, J. and Randet, D., "Electron Microscopy on High-Coercive-Force Co-Cr Composite Films," IEEE Transactions on Magnetics, Vol. MAG-6, No. 4, December, 1970, pp. 768-773. This paper discusses studies of magnetic films of Co sputtered on a nonmagnetic Cr underlayer.

S. Iwasaki, and K. Ouchi, "CoCr Recording Films with Perpendicular Magnetic Anisotropy", IEEE Transactions on Magnetics, MAG-14, No. 5, September 1978, pp. 849-851. This paper describes CoCr magnetic films deposited on polyimide film.

Chen, T. and Charlan, G.B., "High Coercivity and High Hysteresis Loop Squareness of Sputtered Co-Re Thin Film," J. Appl. Phys., 50(6), June 1979, pp. 4285-91. This paper discusses results of the addition of Re to Co in a sputtered magnetic layer to reduce the tendency of sputtered pure Co to form a magnetically undesirable face centred cubic (fcc) structure.

Potter, R. I. and Beardsley, I. A., "Self-Consistent Computer Calculations for Perpendicular Magnetic Recording", IEEE Transactions on Magnetics. Vol. MAG-16, No. 5, September 1980, pp. 967-972.

W. S. Iwasaki, Y. Nakamura and K. Ouchi, "Perpendicular Magnetic Recording with a Composite Anisotropy Medium", IEEE Transactions on Magnetics, Vol. MAG-15, September 1979, pp. 1456-1458. This reference discusses a magnetic medium comprising a CoCr layer on a FeNi layer.

Maloney, W., "RF-Sputtered Chromium-Cobalt Films for High-Density Longitudinal Magnetic Recording," IEEE Transactions on Magnetics, Vol MAG-15, No. 6, November 1979, pp. 1546-48. This reference is directed to a magnetic thin film formed by sputtering a relatively thin Co layer on a much thicker Cr layer.

Ishii, S. Shinohara, M., and Nakagawa, T., "Magnetic Recording Characteristics of Sputtered $Fe_2O_3$ Thin Film Disks," IEEE Transactions on Magnetics, Vol. MAG-15, No. 6, November, 1979, pp. 1549-51. This paper is directed to thin magnetic films of sputtered gamma $Fe_2O_3$.

Iwasaki, S., "Perpendicular Magnetic Recording," IEEE Transactions on Magnetics, Vol. MAG-16, No.1, January 1980, pp. 71-76. This paper also discusses a magnetic thin film member formed by sputtering CoCr on a polyimide substrate.

K. Kobayashi and G. Ishida, "Magnetic and Structural Properties of Rh Substituted CoCr Alloy Films With Perpendicular Magnetic Anisotropy" Conf. of Magnetic Materials and Magnetism, Dallas, November 1980. This reference describes magnetic thin metal films of CoCrRh.

Langland, B. J. and Albert, P. A., "Recording on Perpendicular Anistropy Media with Ring Heads", Intermag Conference in Grenoble, France, paper presented on May 12, 1981, describing test results on magnetic alloys of cobalt, chromium and tantalum.

Maloney, W., "The Optimization of Sputtered Co-Cr Layered Medium for Maximum Areal Density," IEEE Transactions on Magnetics, Vol. MAG-17, No. 6, November, 1981, pp. 3196-98. This reference discloses a thin film layered magnetic member of Co on Cr.

Tagami, K., Nishimoto, K., and Aoyama, M., "A New Preparation Method For $Fe_2O_3$ Thin Film Recording Media Through Direct Sputtering of $Fe_3O_4$ Thin Films," IEEE Transactions on Magnetics, Vol. MAG-17, No. 6, November 1981, pp. 3199-3201. This paper is directed to sputtering $Fe_3O_4$ for subsequent conversion to magnetic gamma $Fe_2O_3$.

Dubin, R., Winn, K., Davis, L., and Cutler, R., "Degradation of Co-based Thin-film Recording Materials in Selected Corrosive Environments," J. Appl. Phys., 53(3), March, 1982, pp. 2579-81. This reference describes corrosion resistance tests on a variety of Co alloy magnetic thin film layers sputtered on nonmagnetic underlayers of either Cr or W.

Kaneko, R. and Koshimoto, Y., "Technology in Compact and High Recording Density Disk Storage," IEEE Transactions on Magnetics, Vol. MAG-18, No. 6, November, 1982, pp. 1221-1226. This paper discusses the technology involved in high density magnetic recording including target values for various parameters of sputtered thin film disks.

The English Abstract of Published/Unexamined Japanese patent application No. 56-63039, published November 5, 1982, shows a thin film structure of a polyester substrate and a Cr underlayer with a number of layers of magnetic CoCr of successively increasing coercivity.

Kobayashi, K., Toda, J., and Yamamoto, T., "High Density Perpendicular Magnetic Recording on Rigid Disks", Fujitsu Sci. Tech. Journal, 19, Vol.1, March 1983, pp. 99-126. This reference describes CoCr magnetic thin film layers sputtered on anodized aluminium with a titanium interlayer.

Gill, R. and Rosenblum, M., "Magnetic and Structural Characteristics of Ion Beam Sputter Deposited CoCr Thin Films". Paper presented at 1983 Intermag Conference, April 1983, Philadelphia, Pa. (To be published in IEEE Transactions on Magnetics). This reference discusses sputtered CoCr thin films on glass substrates and on NiP-surfaced aluminium alloy substrates.

The object of the present invention is to provide an improved magnetic recording structure.

According to the present invention a magnetic recording structure comprising a substrate, a non-magnetic underlayer on said substrate and a magnetic layer on said underlayer is characterised in that both said non-magnetic underlayer and said magnetic layer contain an alloy of Co and at least one other element.

According to one embodiment of the invention both said non-magnetic underlayer and said magnetic layer have a microstructure primarily in hexagonal close packed form so that the easy axis of said magnetic layer extends primarily perpendicular to the plane of said magnetic layer for vertical recording.

According to another embodiment of the invention said non-magnetic underlayer has a microstructure primarily in body centred cubic form and said magnetic layer has a microstructure primarily in hexagonal close packed form so that the easy axis of said magnetic layer extends primarily parallel to the plane of said magnetic layer for horizontal recording.

In order that the invention may be more readily understood reference will now be made to the accompanying drawings, in which:

Figure 1 shows a cross section of part of a thin film disk or other magnetic recording element for vertical magnetic recording including a magnetic layer, a non-magnetic underlayer and a substrate in accordance with the present invention,

Figure 2 is a graph showing variations in the anisotropy field as a function of the thickness of the underlayer of the disk or element illustrated in Figure 1,

Figure 3 is a graph showing variations in magnetic orientation ratio as a function of the temperature of the substrate surface during manufacture of the disk or element illustrated in Figure 1,

Figure 4 is a graph illustrating variations in magnetic film grain size as a function of the thickness of the magnetic layer of the disk or element illustrated in Figure 1,

Figure 5 is a graph showing variations in perpendicular coercivity as a function of the thickness of the magnetic layer of the disk or element illustrated in Figure 1, and

Figure 6 shows a cross section of part of a thin film disk or other magnetic recording element for horizontal recording including a magnetic layer, a non-magnetic underlayer and a substrate in accordance with the present invention.

## Vertical Recording Structure

Figure 1 shows a magnetic recording structure in accordance with the present invention using Co-Cr-Ta to form a hexagonal magnetic medium with vertical anisotropy. The structure is essentially a single layer with a magnetic layer 11a having a hexagonal close packed (hcp) microstructure grown epitaxially on an isostructural, lattice matched, non-magnetic underlayer 11b. This underlayer 11b is deposited on a underbstrate 12 (which may be rigid or flexible) and is composed of $Co_{1-x}\ Cr_{x-y}\ Ta_y$ where $0.6 \geq x \geq 0.35$ and $0.15 \geq y \geq 0$. In this composition range, the underlayer 11b is found to exhibit an (002) oriented hexagonal close-packed (hcp) microstructure with a lattice constant changing from 2.03 to 2.10 as y is increased from 0 to 0.15. This lattice constant closely matches that of the magnetic hcp layer 11a of $Co_{1-x'}\ Cr_{x'-y}\ Ta_y$, where $0.35 \geq x' \geq 0$. The limit of 0.35 is determined by the composition of Co (approx 65 atomic %) below which the alloy is no longer ferromagnetic. The values of both x and $x'$ must be greater than y, and for a binary Co-Cr film y is zero for both layers. For example, a $Co_{.8}\ Cr_{.2}$ magnetic layer can be grown epitaxially on a $Co_{.5}\ Cr_{.5}$ non-magnetic underlayer.

The required thickness of the non-magnetic underlayer 11b on a particular substrate 12 is given by the thickness necessary to establish oriented growth of an (002) interface on which nearly perfect epitaxy of the magnetic layer 11a can take place. This will clearly depend on the substrate material and other sputtering conditions. For example, the work by Messrs. Iwasaki and Ouchi "CoCr Recording Films with Perpendicular Magnetic Anisotropy" identified above indicates that some degree of vertical anisotropy (orientation ratio < 8) can be achieved in approx 1 μm thick Co-Cr films grown directly on polyimide substrates. However it has been found that Co-Cr (or Co-Cr-Ta) films grown on Al-Mg substrates without any underlayer ($t_s = 0$) exhibit anisotropy field values smaller than the demagnetizing field, $4\ \pi M_s$, wnere $M_s$ is the saturated magnetization as illustrated in Figure 2. Therefore, such films are not suitable

for perpendicular recording. From Figure 2, it can be seen that an underlayer thickness of at least 7000 Angstroms was found to be sufficient for achieving the highest vertical orientation.

It should be noted that the interface between the magnetic layer 11a and the underlayer 11b is merely a boundary indicating a change in composition, with no structural or spatial disturbance in atomic arrangements. Therefore, the layers 11a,11b are, in the metallurgical sense, a single phase film with a modulated composition profile. Furthermore, the composition modulation or variation is achieved in practice during manufacture by simply changing, either gradually or abruptly, the voltage applied to one or more sputtering targets in a multi-target vacuum system.

The magnetic recording structure illustrated in Figure 1 has been utilized to achieve the highest orientation ever reported in both Co-Cr and Co-Cr-Ta vertical recording films. The structure was manufactured using a magnetron sputtering system with a base pressure in the range of $10^{-7}$ Torr. The system had three Varian S-guns which can be used for either dc or rf magnetron sputtering. The magnetic recording structure of Figure 1 for vertical recording has been manufactured using different combinations of elemental and alloy targets including Co and Cr, such as targets having compositions of $Co_{.82}Cr_{.18}$; $Co_{.85}Cr_{.15}$; and $Co_{.8}Cr_{.1}Ta_{.1}$. The substrates 12 were heated to a temperature in the range of 190°C to 340°C and were sputter cleaned for 5 minutes prior to film deposition to form the layers 11b and 11a. The film deposition by sputtering was carried out at an argon gas pressure in the range of 2-5 mTorr. Under these experimental conditions, it was possible to achieve the highest vertical orientation ratios of 35 for $Co_{.77}Cr_{.13}Ta_{.10}$ and 23 for $Co_{.77}Cr_{.23}$ magnetic layers.

Figure 3 shows the measured orientation ratios as a function of substrate surface temperature, T, during deposition of $Co_{.77}Cr_{.13}$

$Ta_{.10}$ films. T was measured using an infrared sensor which was used to monitor the temperature rise due to ion bombardment during sputtering. The lowest temperature of 220°C which corresponds to only ion bombardment induced heating, i.e. no intentional substrate heating, results in a high value of the orientation ratio. By taking advantage of this result of lowering the process temperature the deposition procedure can be simplified by the shortening of the turnaround time.

The microstructure of the deposited films was inspected using scanning electron microscopy which indicated extremely uniform columnar grains with no change in grain diameter over the magnetic layer 11a thickness range of 2000 Angstroms to 10,000 Angstroms, as shown in Figure 4. Smaller as well as larger grain sizes (in the range of 350 Angstroms to 4000 Angstroms) were achieved by changing the substrate temperature used for growth of the film. Similarly, the magnetic properties of the magnetic layer 11a were controlled independent of the thickness of this layer. Figure 5 shows the perpendicular coercivity measured in $Co_{.77}$ $Cr_{.13}$ $Ta_{.10}$ magnetic layers as a function of thickness of the layers in the range of 1000 Angstroms to 10,000 Angstroms. Under the deposition conditions used, these highly oriented films exhibited perpendicular coercivities in the range of 850 Oe. The perpendicular coercivity could be controlled over the range of 400 Oe to 1300 Oe by changing the alloy composition as well as the substrate temperature.

Magnetic test results of thin film vertical recording disks or other magnetic recording elements made as described above indicate excellent reproducibility of roll-off curves of nominally identical disks which substantiated static magnetic measurements. A -3 dB recording density of more than 30,000 flux changes/inch has been achieved using a thin film head with a gap spacing of 0.6 μm at a flying height of 2500 Angstrom (10 μinch).

## Horizontal Recording Structure

In order to form magnetic structures suitable for horizontal recording, it has been found that by properly controlling the Co content of the nonmagnetic Co alloy underlayer 11b, this underlayer can be deposited primarily in bcc form on a substrate 12, which may be either rigid or flexible. After deposition of the primarily bcc underlayer 11b to the desired thickness, the Co content may be changed so that the overlaying sputtered layer 11a of a Co alloy will be magnetic in primarily hcp form. The orientation of the "C" or easy axis of the hcp Co alloy magnetic layer 11a can be oriented in the plane of the magnetic structure, thus producing a horizontal recording structure. This dual layer structure is illustrated in Figure 6 and provides a suitable environment for orienting the "C" axis of the magnetic hcp layer in the plane of the structure . The composition of the magnetic layer 11a is $Co_{1-x'}$, $Z_{x'}$, and the composition of the non-magnetic underlayer 11b is $Co_{1-x}X_x$ where Z and X are one or more additive elements selected from a group including Cr, Ru, Pt, Pd, W, Ta, V, Mo, and Ti.

For the general case in which the layers 11a and 11b are Co alloys with Z or X, the following relationships should exist among the compositions of the alloys:

Magnetic Layer:

$Co_{1-x'}$, $Z_{x'}$, where $0.01 \leq x' \leq 0.35$

Nonmagnetic Underlayer:

$Co_{1-x} X_x$ where $0.60 \leq x \leq .99$

For the more specific case in which the layers 11a and 11b are Co Cr alloys with Z or X, it has been found that the following relationships should exist among the compositions of the alloys:

Magnetic Layer:

$Co_{1-x'}\ Cr_{x'-y'}\ Z_{y'}$ where $0.01 \leq x' \leq 0.35$
where $0.01 \leq y' \leq 0.15$

Nonmagnetic Underlayer:

$Co_{1-x}\ Cr_{x-y}\ X_{y}$ where $0.35 \leq x \leq 0.99$
where $0 \leq y \leq 0.15$

A structure manufactured so as to produce the above relationships provides a "pseudo" lattice between the (110) plane of the hcp microstructure of the magnetic layer 11a and the (002) plane of the bcc microstructure of the underlayer 11b which places the "C" axis, (002) direction, of the hcp lattice in the plane of the magnetic layer 11a. This is termed pseudo epitaxial because epitaxial refers to methods of growing single crystals, and the CoCr materials involved here are polycrystalline. It has been found that if the magnetic layer 11a is sputtered directly onto the substrate 12, the layer does not have a highly oriented structure. This is because the substrate surface presents a "disordered" interface to the deposited magnetic layer, so no lattice matching occurs. The use of an underlayer 11b effectively isolates the substrate 12 from the magnetic layer 11a, and has the important effect of allowing the choice and use of substrates to be made essentially independently of the particular magnetic layer used.

In one example employing a CoCrRu magnetic layer 11a, the nonmagnetic CoCr underlayer 11b had a bcc crystal structure and contained about 15 atomic % Co. Under the deposition conditions

employed, this underlayer was found to induce preferred growth of the (002) plane of bcc in the thickness range from 500 to 3500 Angstroms. X-ray diffraction patterns of the overlaying CoCrRu magnetic layer (300-1500 Angstroms) indicated predominance of the hexagonal (110) plane. This crystallographic orientation, which involves in-plane alignment of the hexagonal C-axis, is enhanced by a favourable lattice matching (< 3%) with the (002) CrCo underlayer.

The magnetic recording structure illustrated in Figure 6 has been manufactured using a magnetron sputtering system with a base pressure around $10^{-7}$ Torr. The system had three Varian S-guns which can be used for either dc or rf sputtering. The system was operated using different combinations of alloy and elemental targets including $Co_{0.8}Cr_{0.2}$; $Co_{0.85}Cr_{0.15}$; $Co_{0.93}Ru_{0.07}$; and Cr. Al-Mg disk substrates were sputter cleaned for five minutes prior to film deposition to form the layers 11b and 11a. The film deposition by sputtering was carried out at a temperature in the range of 50 to 200°C under argon gas pressure of 2 - 3 mTorr.

The horizontal C-axis anisotropy in structures as illustrated in Figure 6 is believed to contribute to the high squareness of their in-plane magnetic loops. Typical loop parameters were: coercive squareness = 0.95, squareness = 0.85, and remanence = 3200 to 4200 Gauss. Desired coercivity values in the range of 350 to 700 Oe and $M_r\delta$ values from 1 to 4 $X10^{-3}$ $emu/cm^2$ could easily be obtained by varying deposition conditions including the composition of the layers. The latter was in the range of: Co: 77-83, Cr: 16-23, and Ru: 0 - 2 atomic %. In general, it has been found that the coercivity of the magnetic layer 11a increases with increases in either substrate temperature, underlayer thickness or Co concentration, and the coercivity increases with decreasing thickness of the magnetic layer 11a.

In addition to layers of CoCrRu, excellent magnetic disks for longitudinal recording have been produced by sputter depositing a

magnetic layer 11a of CoCr, primarily in hcp form, on a nonmagnetic layer 11b of CoCr, primarily in bcc form.

Further, magnetic layers 11a of CoPt, primarily in hcp form, have been deposited on nonmagnetic layers 11b of CoCr, primarily in bcc form, with excellent magnetic results. Still further, magnetic layers 11a of CoPd, primarily in hcp form, have been deposited on nonmagnetic layers 11b of CoCr, primarily in bcc form, to produce very satisfactory horizontal recording disks. For palladium, the magnetic layer 11a can have the same formulation range as for platinum. For both Pd and Pt magnetic layers, the nonmagnetic underlayer 11b can have the same formulation range described above with reference to Figure 6.

A series of CoCrRu layers were formed in structures as illustrated in Figure 6 with a range of coercivity from 390 to 695 Oe and a range of thickness from 350 to 1000 Angstroms. Longitudinal recording tests were performed using thin film heads made with a gap spacing of 0.6 µm at flying height of 10 µinch. These high coercivity structures exhibited isolated pulse amplitudes of 430 µV, a half amplitude width, $PW_{50}$, of 1.27 mm, and a -3dB point of 730 flux changes/mm. Good overwrite characteristics, smooth envelopes, and low noise levels were observed on all structures tested.

## SUMMARY

For both the vertical and horizontal recording structures (Figures 1 and 6), the additive elements are chosen for purposes of attaining specific magnetic properties in the magnetic layer 11a, improving metallurgical stability of both layers 11a and 11b, improving their adherence and/or adjusting the lattice constant of both layers to attain or enhance lattice matching between the nonmagnetic underlayer 11b and the substrate 12, such that the crystallographic orientation of the magnetic layer 11a is conducive

to attainment of large magnetic anisotropy whose easy axis of magnetization is oriented either perpendicular to or parallel to the plane of the substrate 12. Multiple levels or stackings of the above underlayer and magnetic layer structures can also be used.

Following are some of the advantages achieved by employing the magnetic recording structures described herein:

1. The manufacturing process for the structure is a simple process involving the deposition of two compatible metal layers in one vacuum pump-down with excellent uniformity and thickness control of the layers.

2. The manufacture of the structures has been achieved reproducibly in different sputtering systems using various target combinations.

3. The manufacturing process is reasonably tolerant to practical process variations of power density, sputtering pressure, and background pressure.

4. The structures are characterised by consistent recording performance featuring large signal amplitude, narrow pulse width, high bit density, low noise, and low defect counts.

## CLAIMS

1. A magnetic recording structure comprising a substrate (12), a non-magnetic underlayer (11b) on said substrate, and a magnetic layer (11a) on said underlayer,

characterised in that both said magnetic layer and said non-magnetic underlayer contain an alloy of Co and at least one other element.

2. A magnetic recording structure as claimed in claim 1 characterised in that both said non-magnetic underlayer (11b) and said magnetic layer (11a) have a microstructure primarily in hexagonal close packed form so that the easy axis of said magnetic layer extends primarily perpendicular to the plane of said magnetic layer for vertical recording.

3. A magnetic recording structure as claimed in claim 1 characterised in that said non-magnetic underlayer (11b) has a microstructure primarily in a body centred cubic form and said magnetic layer (11a) has a microstructure primarily in hexagonal close packed form so that the easy axis of said magnetic layer extends primarily parallel to the plane of said magnetic layer for horizontal recording.

4. A magnetic recording structure a claimed in Claim 2 characterised in that the alloy in both said magnetic layer (11a) and said non-magnetic underlayer (11b) includes Cr.

5. A magnetic recording structure a claimed in Claim 4 characterised in that the alloy in both said magnetic layer (11a) and said non-magnetic underlayer (11b) includes Ta.

6. A magnetic recording structure as claimed in Claim 4 or Claim 5 characterised in that the alloy in said non-magnetic underlayer (11b) has a composition as follows:

$$Co_{1-x}Cr_{x-y}Ta_{y}$$

where $0.6 \geq x \geq 0.35$ and $0.15 \geq y \geq 0$

7. A magnetic recording structure as claimed in any one of Claims 4, 5 or 6

characterised in that the alloy in said magnetic layer (11a) has a composition as follows:

$$Co_{1-x}Cr_{x'-y}Ta_{y}$$

where $0.35 \geq x' \geq 0$

8. A magnetic recording structure as claimed in Claim 3 characterised in that the alloy in said non-magnetic underlayer (11b) includes one or more elements selected from the group: Cr, Ru, Pt, Pd, W, Ta, V, Mo and Ti.

9. A magnetic recording structure as claimed in Claim 8 characterised in that the alloy in said non-magnetic underlayer (11b) has a composition as follows:

$$Co_{1-x}X_{x}$$

where $0.60 \leq x \leq 0.99$
and X is an element selected from the group:
Cr, Ru, Pt, Pd, W, Ta, V, Mo and Ti.

10. A magnetic recording structure as claimed in Claim 8 characterised in that the alloy in said non-magnetic underlayer (11b) has a composition as follows:

$Co_{1-x}Cr_{x-y}$

where $0.35 \leq x \leq 0.99$
$0 \leq y \leq 0.15$

and X is an element selected from the group:
Cr, Ru, Pt, Pd, W, Ta, V, Mo and Ti.

11. A magnetic recording a structure as claimed in any one of Claims 3, 8, 9 or 10
characterised in that the alloy in said magnetic layer (11a) includes one or more elements selected from the group:
Cr, Ru, Pt, Pd, W, Ta, V, Mo and Ti.

12. A magnetic recording structure as claimed in Claim 11 characterised in that the alloy of said magnetic layer (11a) has a composition as follows:

$Co_{1-x'}Z_{x'}$

where $0.01 \leq x' \leq 0.35$

and Z is an element selected from the group:
Cr, Ru, Pt, Pd, W, Ta, V, Mo and Ti.

13. A magnetic recording structure as claimed in Claim 11 characterised in that the alloy of said magnetic layer (11a) has a composition as follows:

$Co_{1-x'}Cr_{x'-y'}Z_{y}$

where $0.01 \leq x' \leq 0.35$

$0.01 \leq y' \leq 0.15$

and Z is an element selected from the group:
Cr, Ru, Pt, Pd, W, Ta, V, Mo and Ti.

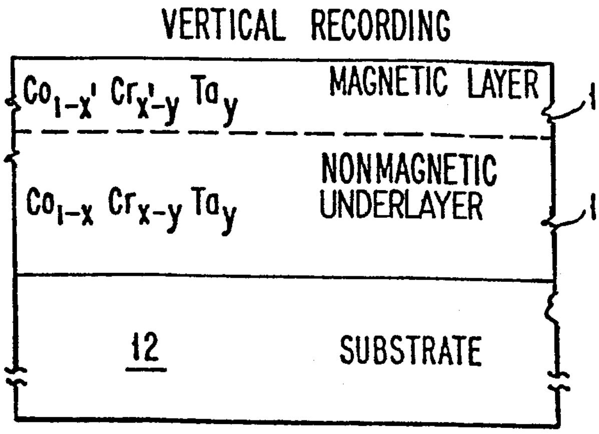


FIG. 1

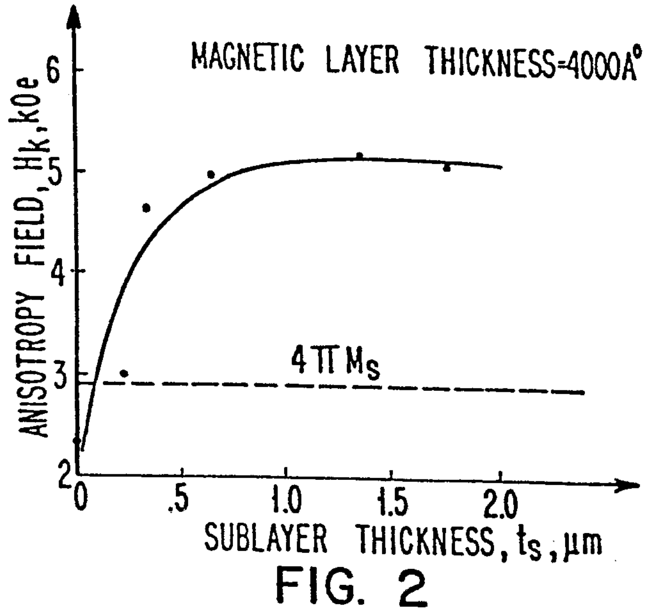


FIG. 2

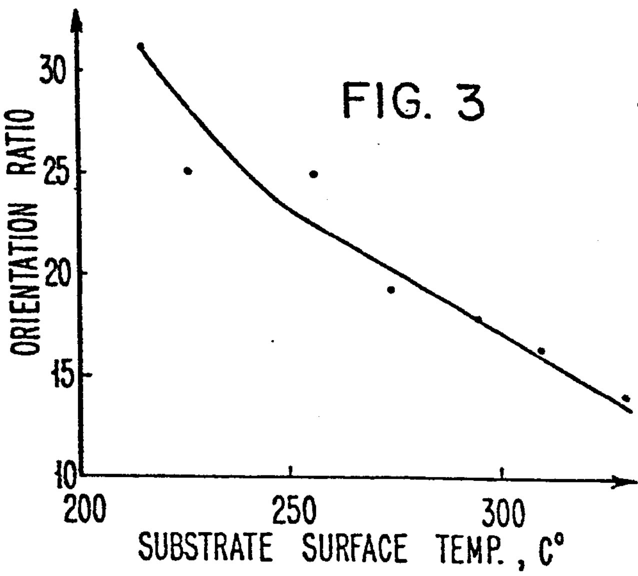


FIG. 3

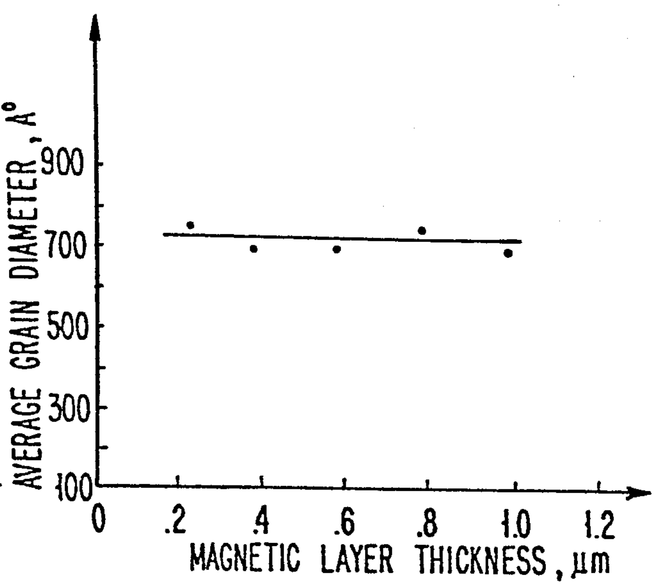


FIG. 4

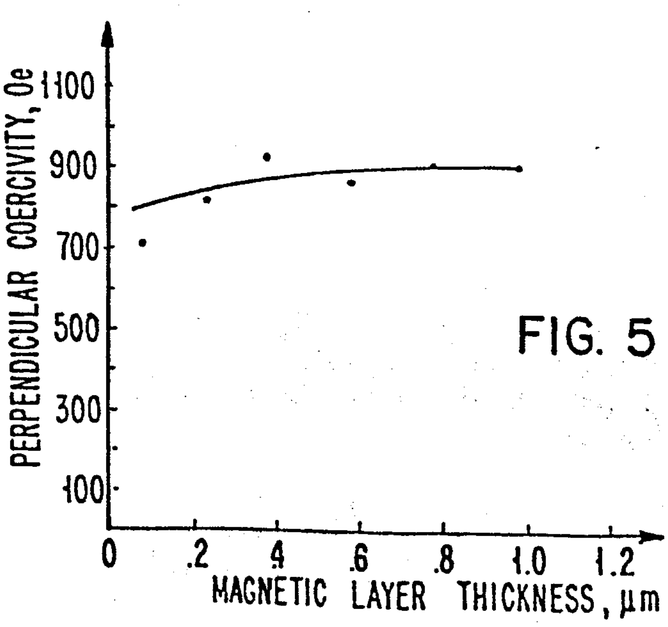


FIG. 5

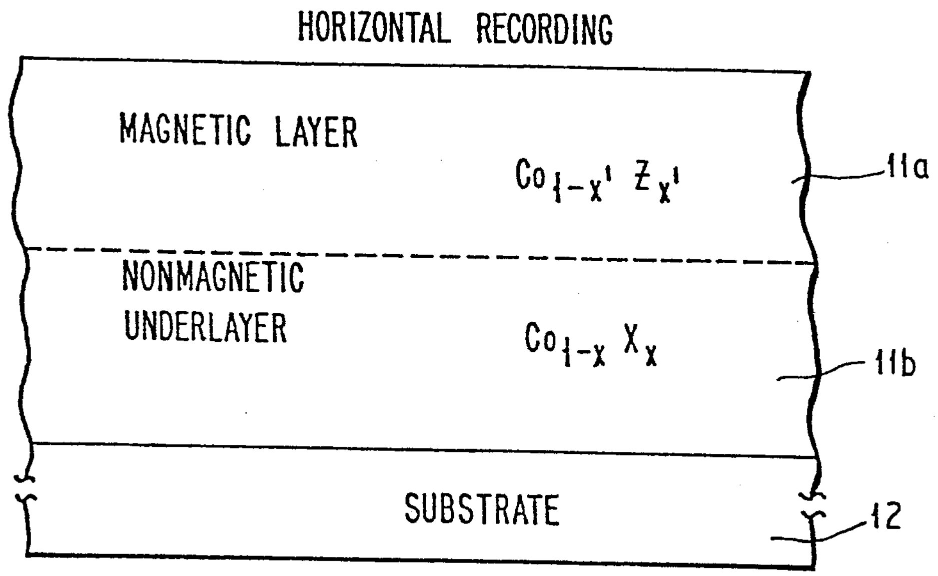
HORIZONTAL RECORDING
MAGNETIC LAYER
$Co_{1-x'} Z_{x'}$
11a
NONMAGNETIC
UNDERLAYER
$Co_{1-x} X_x$
11b
SUBSTRATE
12

FIG. 6

European Patent Office

0140513

Application number

# EUROPEAN SEARCH REPORT

EP 84305678.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,P | DE - A1 - 3 339 245 (TDK)<br>* Abstract; page 8, lines 9-25; page 10, lines 4-8 *<br>-- | 1 | G 11 B 5/66 |
| A | DE - A1 - 3 228 044 (VICTOR)<br>* Abstract *<br>-- | 1 | |
| D,A | IEEE TRANSACTIONS ON MAGNETICS, vol. 14, no. 5, September 1978<br>S. IWASAKI "Co-Cr Recording Films with Perpendicular Magnetic Anisotropy"<br>pages 849-851<br>* Abstract *<br>-- | 1 | |
| D,A | IEEE TRANSACTIONS ON MAGNETICS, vol. 15, no. 6, November 1979<br>S. IWASAKI "Perpendicular Magnetic Recording with a Composite Anisotropy Film"<br>pages 1456-1458<br>* Abstract *<br>-- | 1 | TECHNICAL FIELDS SEARCHED (Int. Cl.4)<br>G 11 B 5/00 |
| D,A | IEEE TRANSACTIONS ON MAGNETICS, vol. 16, no. 1, January 1980<br>S. IWASAKI "Perpendicular Magnetic Recording"<br>pages 71-76<br>* Abstract *<br>---- | 1 | |

The present search report has been drawn up for all claims

| Place of search | Date of completion of the search | Examiner |
|---|---|---|
| VIENNA | 27-11-1984 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document